# EUROPEAN PATENT SPECIFICATION

(11) **EP 0 947 280 B1**
(45) Date of publication and mention of the grant of the patent: **28.08.2002**
(21) Application number: 99302352.2
(22) Date of filing: 26.03.1999
(51) Int. Cl.: B23K 20/12

(54) **Friction stir welding method and friction stir welding apparatus**
Drehendes Reibungschweissverfahren und Vorrichtung
Méthode et appareil pour le soudage par friction à mouvement cyclique

(30) Priority: 26.03.1998 JP 7882398
(43) Date of publication of application: 06.10.1999
(73) Proprietor: Hitachi, Ltd., Chiyoda-ku, Tokyo 101-8010 (JP)
(72) Inventor: Kawasaki, Takeshi, Kudamatsu-shi, Yamaguchi 744-0002 (JP); Sagawa, Toshiaki, Yanai-shi, Yamaguchi 742-0021 (JP); Ezumi, Masakuni, Kudamatsu-shi, Yamaguchi 744-0002 (JP)
(74) Representative: Paget, Hugh Charles Edward

(56) References cited:
- WO-A-96/38256
- GB-A- 2 306 366
- US-A- 5 813 592

## Description

### Background of the Invention:

The present invention relates to a friction stir welding method and a friction stir welding apparatus, and particular to a friction stir welding method and a friction stir welding apparatus used, for example, in welding an aluminum alloy material frame member etc. for use in a side body structure of a car body in a railway vehicle.

A friction stir welding method is a method in which by rotating a round rod (here called a rotary body) inserted in a welding portion to be subjected to welding and moving the rotary body along the welding line. See EP 0 615 480 on which the preamble of claim 1 is based. Material in the welding portion to be subjected to welding is exothermal heated and softened and further elastically fluidized to carry out a solid phase welding.

The rotary body used in the friction stir welding method comprises a small diameter portion which is inserted fully to the welding portion and a large diameter portion which is positioned next to the small diameter portion and this large diameter portion of the rotary body is inserted a little also to the welding portion to be subjected to welding. The small diameter portion and the large diameter portion of the rotary body are arranged at the same axis. Both the small diameter portion and the large diameter portion of the rotary body are rotated.

A boundary face portion between the small diameter portion and the large diameter portion of the rotary body is inserted also a little into the welding portion to be subjected to welding. In general, a gap is formed between side vertical wall portions of two welding members to be welded. The material at the welding portion is moved at the gap and the material to be welded surrounding the gap becomes thin.

Accordingly, an end portion of the welding member to be welded is formed with a thicker portion, namely the welding member to be welded has a thicker portion at its end.

This friction stir welding technique for two members to be welded having the thicker portion at the ends thereof is shown in EP 0615480, "Welding & Metal Fabrication" January 1995, pages 13, 14 and 16, and EP 0797043.

As to the material to be subjected to welding, and the material, a size, a rotation speed, and a moving speed of the rotary body, detail is shown in "Study of Friction Stir Welding" at Welding Association Japan Meeting Symposium Summary : No. 56 ('95 - 4), pages 208 and 209.

The friction stir welding is a technique in which the material of the member to be subjected to welding is softened and welded, but there is no supplement of the metal. Accordingly, in a case where two members to be welded are welded by abutting them, when there exists a gap formed between the two members to be welded, then a thickness of a welding portion to be subjected to welding will become thin. As stated in EP 0797043, by forming the thicker portions of the members to be welded, metal is supplemented to the gap formed between the two members to be welded from the thicker portions of the members.

However, when the size (horizontal width) of the gap formed between the two members to be welded is larger than the diameter of the small diameter portion of the rotary body, it is impossible to carry out the friction stir welding.

Even when the size of the above gap is smaller than the diameter of the small diameter portion of the rotary body, the friction stir welding will become insufficient as the gap size approaches to the diameter of the small diameter portion of the rotary body. The size of the above stated gap is determined by the manufacture accuracy of the members to be welded.

In particular, for example, in a case where a side body structure of a car body of a railway vehicle is manufactured by welding long aluminum alloy extruded frame members, since the size of a gap may become easily large, the friction stir welding becomes difficult.

When the member to be welded is long depending of the manufacture accuracy of the welding portion to be subjected to welding, the management of the size of the gap becomes difficult, and then the friction stir welding technique becomes difficult.

Further, another factor is the accuracy for fixing the members to be welded to a frame stand. For example, the length of the extruded frame member for the side body structure of the car body of the railway vehicle is about from 20 m to 25 m.

### Summary of the Invention:

An object of the present invention is to provide a friction stir welding method and a friction stir welding apparatus such that even when the size of a gap between two members to be welded is large, friction stir welding can be easily carried out.

According to the invention there is provided a method of friction stir welding as set out in claim 1.

Preferred optional features of the method are as set out in claims 2 to 9.

In another aspect, the present invention provides apparatus for friction stir welding as set out in claim 10.

### Brief Description of Drawings:

Fig. 1 is a longitudinal cross-section view of a rotary body and welding portions of two extruded frame members for carrying out a friction stir welding method of one embodiment according to the present invention;
Fig. 2 is a plan view showing friction stir welding of two extruded frame members using a rotary body which is moved in zigzag form;
Fig. 3 is a longitudinal cross-section view showing two extruded frame members after the friction stir welding technique has been carried out;
Fig. 4 is a perspective view showing a friction stir welding apparatus for carrying out welding of two extruded frame members, of one embodiment according to the present invention;
Fig. 5 is a longitudinal cross-sectional view showing the friction stir welding apparatus shown in Fig. 4;
Fig. 6 is a perspective view showing a car body of a railway vehicle having frame members in which the friction stir welding technique is carried out;
Fig. 7 is a longitudinal cross-sectional view showing an essential portion of two extruded frame members having welding portions to be subjected to a friction stir welding method of another embodiment according to the present invention.
Fig. 8 is a longitudinal cross-sectional view showing an essential portion of two extruded frame members having welding portions to be subjected to a friction stir welding method of a further embodiment according to the present invention; and
Fig. 9 is a right side view showing one frame member to be welded having a rib shown in Fig. 8.

### Description of the Invention:

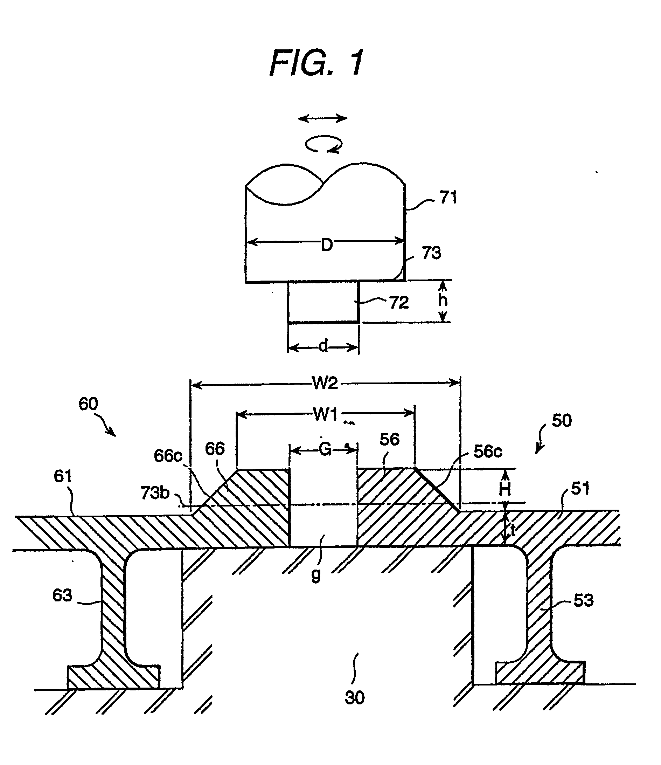

One embodiment a friction stir welding method which is applied to two extruded frame members of a car body of a railway vehicle will be explained referring to Fig. 1 to Fig. 6.

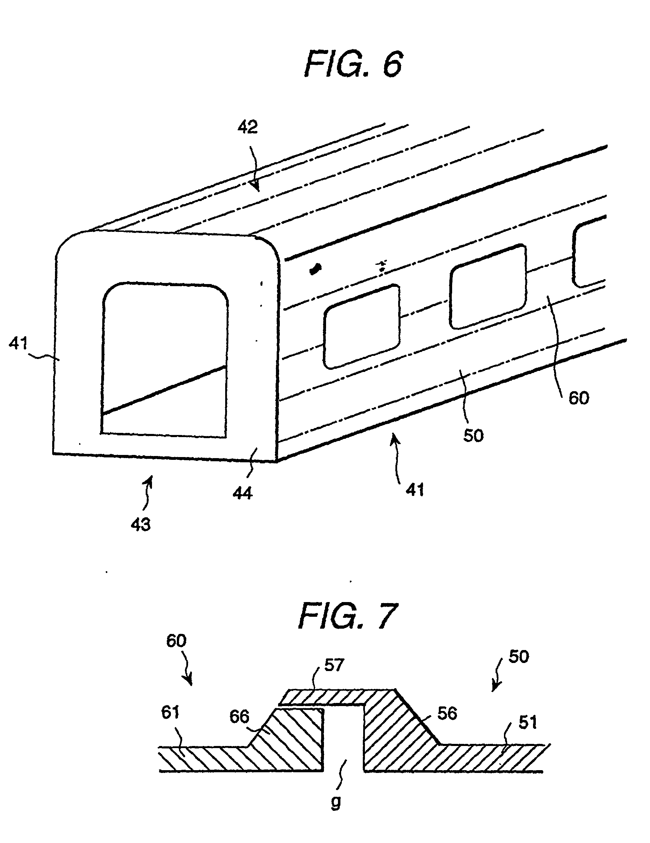

In Fig. 6, a car body of a railway vehicle comprises a side body structure 41, a roof body structure 42, a floor body structure 43 and a longitudinal direction end portion end body structure 44. The side body structure 41 is constituted by arranging plural extruded frame members 50 and 60 in parallel and joining them by a friction stir welding method according to the present invention.

The friction stir welding method is carried out on the side body structure 41 of the car body of the railway vehicle as shown in Fig. 1. The roof body structure 42 and the floor body structure 43 are constituted similarly. A connection between the side body structure 41 and the roof body structure 42 and a connection between the side body structure 41 and the roof body structure 43 are carried out by means of MIG welding etc..

Fig. 1 shows the welding portion to be subjected to welding of the extruded frame members 50 and 60 for constituting the side body structure 41 and also a rotary body 70. Each of the extruded frame members 50 and 60 is a longitudinally extruded aluminum alloy frame member having a longitudinal length of about from 20 m to 25 m, for example. The frame members 50 and 60 comprise plates 51 and 61 and plural ribs 53 and 63 on one side of these plates 51 and 61. The sides of the ribs 53 and 63 form an inner side of the car body of the railway vehicle. The ribs 53 and 63 are connected to the already known post member.

End portions of the plates 51 and 61 of the two extruded frame members 50 and 60, namely the welding portion to be subjected to welding, protrude at the opposite side to the ribs 53 and 63 and form thick portions 56 and 66. The apexes of the thick portions 56 and 66 of the two extruded frame members 50 and 60 are connected to the plates (non-protrusion portions) 51 and 61 through inclined face portions 56c and 66c.

In the friction stir welding method of this embodiment according to the present invention, the portion to be subjected to welding includes two opposite parts of the apexes of the thick portions 56 and 66, two opposite vertical side end walls of the thick portions 56 and 66, and two opposite vertical side end walls of the plates 51 and 61 which are connected continuously to the two opposite vertical side end walls of the thick portions 56 and 66, for example.

The above stated portion to be subjected to welding has a predetermined interval or size (a horizontal direction width) G of a gap g, before the practice of the friction stir welding method. In this embodiment, the size G of the gap is 2 mm at maximum, for example. This size G of the gap is desired to be a small value.

The two extruded frame members 50 and 60 are mounted on a frame stand 30 by abutting the end portions of the welding portions and fixed to the frame stand 30. Then, the extruded frame members 50 and 60 are welded each other with a predetermined interval at the portions of the thick thickness portions 56 and 66 by friction stir welding.

With this construction, the gap at the welding portions of the two extruded frame members 50 and 60 is managed at a predetermined value, so that the two end portions are made to contact (the gap is zero) or to lessen the size G of the gap g between the two end portions. When the size G of the gap g is small in value, the reciprocating amount of the rotary body 70 can be made small, as a result the welding time can be shortened.

However, the size of G of gap g is determined by the manufacture accuracy of the welding portions of the two extruded frame members 50 and 60. When the end portions of the two extruded frame members 50 and 60 is formed with a wave form along to direction of the welding line (extruded direction of the extruded frame member or a longitudinal direction of the extruded frame member), it is difficult to fix the extruded frame members 50 and 60 to the frame stand 30 to reduct the size G of the gap g. In particular, in a case of the long member, the manufacture accuracy of the two extruded frame members 50 and 60 is inferior and it is difficult to set the size G of the gap g at a predetermined value.

When the size G of the gap g is larger than a diameter d of a small diameter portion 72 of a rotary body 70, it is impossible to carry out the friction stir welding. Even if the size G of the gap g is smaller than the diameter d of the small diameter portion 72 of the rotary body 70, the friction stir welding becomes insufficient when the size G of the gap g approaches nearly to a diameter d of the small diameter portion 72 of the rotary body 70.

The rotary body 70 comprises a large diameter portion 71 and the small diameter portion 72 at a tip end of the large diameter portion 71. The diameter D of the large diameter portion 71 of the rotary body 70 is about 20 mm, for example, and a diameter d of the small diameter portion 72 of the rotary body 70 is 6 mm, for example. The rotary body 70 is inserted from the apex side of the thick portions 56 and 66 of the two extruded frame members 50 and 60 and is rotated.

During the insertion of the rotary body 70, a tip end (a lower end) of the small diameter portion 72 of the rotary body 70 approaches the side towards the ribs 53 and 63 (the frame stand 30 side) of the thick portions 56 and 66. The height of the plates 51 and 61 is 3.3 mm, for example.

A boundary face 73 between the large diameter portion 71 and the small diameter portion 72 of the rotary body 70 is positioned at a position (a horizontal direction line) 73b which is outward (towards the apex side of the thick portions 56 and 66) from the outer faces (the faces of the plates 51 and 61 opposite to the ribs 53 and 63) of the plates 51 and 61. In other words, the boundary face portion 73 is not inserted to go beyond the position (the horizontal direction line) 73b.

A rotation center of the rotary body 70 is positioned at an intermediate position (an intermediate portion of the gap g) between the end portions of the two extruded frame members 50 and 60 to be welded. A sensor (not shown in figure) detects corner portions of the thick portions 56 and 66 of the two extruded frame members 50 and 60 and further detects the size G of the gap g. Then the rotation center of the rotary body 70 is positioned at the intermediate portion (the welding line) between the corner portions of the thick portions 56 and 66 of the two extruded frame members 50 and 60.

Since the large diameter portion 71 of the rotary body 70 is inserted in the thick portions 56 and 66 of the two extruded frame members 50 and 60, softened metal from the two extruded frame members 50 and 60 moves toward the gap G, and the metal becomes united for connecting the extruded frame members 50 and 60 to be welded and then welding portion to be subjected to welding is welded fully by the metal. Excess metal is displaced as a facet.

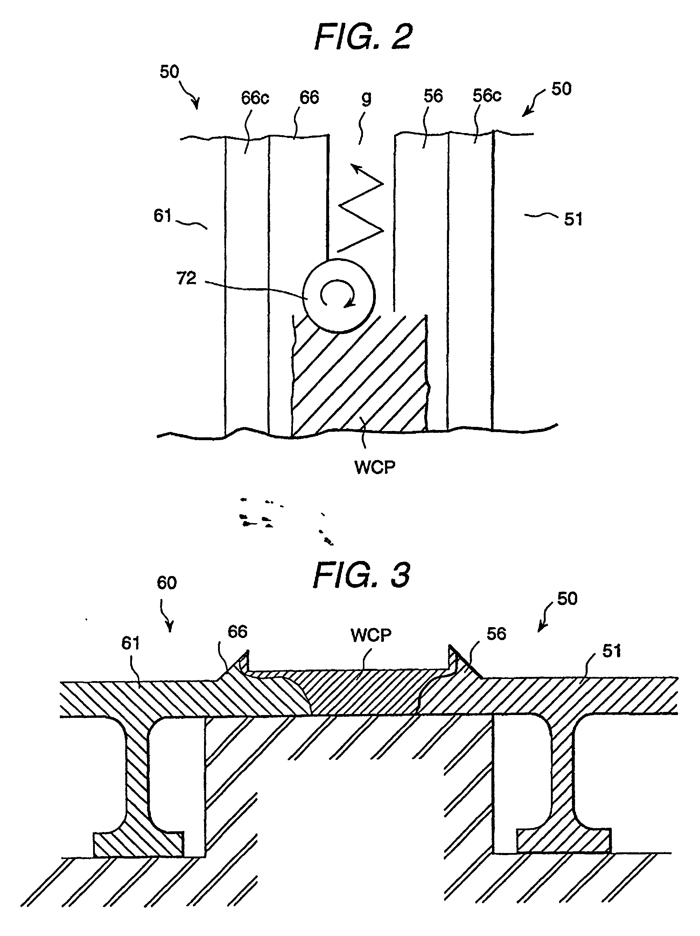

Fig. 1 and Fig. 2 show a case where the size G of the gap g between the extruded frame members 50 and 60 to be welded is large, in other words the horizontal width of the welding portion to be subjected to welding is large. When the rotary body 70, as stated in above, is inserted to the thick portions 56 and 66 of the extruded frame members 50 and 60, while rotating the rotary body 70 and moving it along to the gap g (namely, the welding line), the extruded frame members 50 and 60 are welded. In this time, the rotary body 70 is moved reciprocating to a direction (in Fig. 1, a right and left direction) orthogonal rotative to the welding line. Accordingly, the rotary body 70 is moved in a zigzag as shown in Fig. 2.

As stated above, an overlap between the rotary body 70 and one thick portion 56 or 66 can be made similar to a case where the size G of the gap g is small. Further, the overlap of other thick portion 66 or 56 can be made similar to a case where the size G of the gap g is small. As a result, the extruded frame members 50 and 60 can be welded fully by the friction stir welding method using the zigzag movement of the rotary body 70.

A connection condition of the extruded frame members 50 and 60 after the friction stir welding is shown in Fig. 3. Fig. 3 shows schematically the two extruded frame members 50 and 60 after the friction stir welding. WP indicates the welding connection portion in which the metal from the two extruded frame members 50 and 60 is softened by the rotary body 70 and forms the welding connection portion WP between the two extruded frame members 50 and 60 including the welding portion to be subjected to welding.

After the friction stir welding, the residue of the thick portions 56 and 66 of the two extruded frame members 50 and 60, as shown in Fig. 3, are cut off to form a smooth outer face of the plates 51 and 61 of the two extruded frame members 50 and 60. Accordingly, this smooth outer face can be formed as an outer face of the car body of the railway vehicle, for example.

The dimensions (the largeness) of the thick portions 56 and 66 of the two extruded frame members 50 and 60 in this embodiment according to the present invention will be explained. In a case where the two thick portions 56 and 66 are abutted, as shown in Fig. 1, a horizontal direction width (W1 - G) of the apexes of the thick portions 56 and 66, in which the width W1 is 12 mm for example, is larger than the diameter d of the small diameter portion 72 of the rotary body 70 but is smaller than the diameter D of the large diameter portion 71 of the rotary body 70. A horizontal direction width (W2 - G) in a base portion of the two thick portions 56 and 66, in which the width W2 is 22 mm for example, is larger than the diameter D of the large diameter portion 71 of the rotary body 70 as shown in Fig. 1.

The vertical length h (3.3 mm in this embodiment) of the small diameter portion 72 of the rotary body 70 is larger than the thickness of the plates 51 and 61 of the two extruded frame members 50 and 60. A projection dimension H (1 mm), the width W1 (12 mm) and the width W2 (22 mm) of the two extruded frame members 50 and 60 are determined taking into consideration the amount of the metal supplemented to the gap g.

The amount in which the rotary body 70 is moved orthogonally (in Fig. 1 and Fig. 2, the right and left direction) to the welding line is determined by the size G of the gap g and the overlap amount between the small diameter portion 72 of the rotary body 70 and the thick portions 56 and 66 of the two extruded frame members 50 and 60. A necessary amount for overlapping the small diameter portion 72 of the rotary body 70 and the thick portions 56 and 66 is determined in consideration of the friction stir welding strength.

The reciprocating speed (speed in the direction orthogonally (in Fig. 1 and Fig. 2, the right and left direction) to the welding line) of the rotary body 70 is to be larger than the speed (speed along to the welding line) of the rotary body 70. When the rotary tool 70 is moved along the welding line, its speed is determined so that a non-welded portion is not generated by the reciprocating motion of the rotary body 70. For example, the reciprocating speed of the rotary body 70 is made two times relative to the speed of the rotary body 70.

In this embodiment according to the present invention, the moving speed V1 of the rotary body 70 is 60 cm/min and the rotating speed of the rotary body 70 is 1800 rpm. The reciprocating speed V2 of the rotary body 70 is determined by the moving speed V1 of the rotary body 70. The reciprocating speed V2 of the rotary body 70 relates to the size of the gap g. When the size G of the gap is 2 mm, the reciprocating speed V2 of the rotary body 70 is about 1.5-3 times, desirably about 2-3 times the speed V1.

When the size G of the gap g is smaller than a predetermined value, it is unnecessary to carry out the reciprocating motion of the rotary body 70. By detecting the size of the size G of the gap g using the sensor, the necessity of the reciprocating motion of the rotary body 70 is determined. Accordingly, when the size G of the gap g is small, since the reciprocating motion of the rotary body 70 is stopped, in comparison with the practice of the reciprocating motion of the rotary body 70, the exothermic heat according to the friction stir welding can be made less.

Further, when the size G of the gap g is small, the move speed of the rotary body 70 along the welding line can be made large. Further, when the size G of the gap g is larger than a size of the gap g for which it is unnecessary to carry out the reciprocating motion but is not large in comparison with the case of the large size of the gap g, the moving speed of the rotary body along the welding line can be made high.

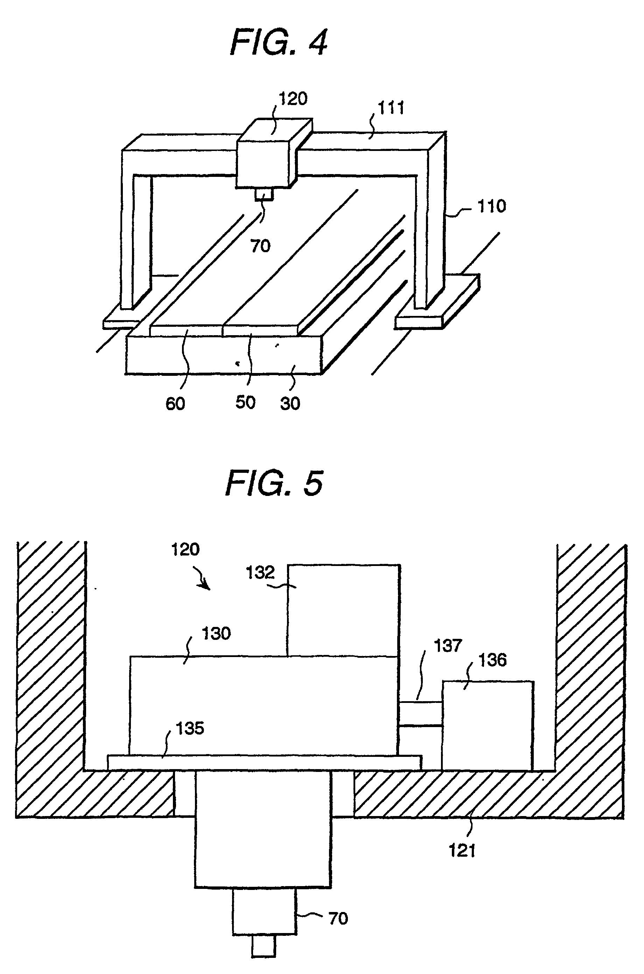

Fig. 4 and Fig. 5 show apparatus for carrying out the friction stir welding. The rotary body 70 is installed on a gate type running body 110 which strides over the extruded frame members 50 and 60 fixed on the frame stand 30. The running body 110 moves under a predetermined speed in the longitudinal direction of the extruded frame members 50 and 60. A friction stir welding apparatus 120 having the rotary body 70 is installed on a beam member 111 of the running body 110. The friction stir welding apparatus 120 detects the thick portions 56 and 66 of the extruded frame members 50 and 60 using a sensor and moves along the beam member 111 to position at the center of the gap g.

The friction stir welding apparatus 120 comprises a frame stand 121 on which the running body 111 runs, a rotation apparatus 130 for rotating the rotary body 70, a rail member 135 on which the rotation apparatus 130 moves freely, and a drive apparatus 136 for reciprocating the rotation apparatus 130 in a horizontal direction. The drive apparatus 136 is installed on the frame stand 121 and to connected to the rotation apparatus 130 through a joint member 137. The rotation apparatus 130 comprises an electric motor 131 and a reduction machine 132.

The frame stand 121 is installed on a running body (not shown in figure) which runs on the beam member 111 and a height of the frame stand 121 can be varied. On the frame stand 121 rollers (not shown in figure) are suspended which press down the plates 51 and 61 at the vicinity of the thick thickness portions 56 and 66. The extruded frame members 50 and 60 are adhered closely to the frame stand 30 by these rollers.

Further, a metal cutting-off machine (for example, an end mill machine) is installed on the frame stand 121 and positioned behind the rotary body 70. The thick portions 56 and 66 after the friction stir welding are cut off by this metal cutting-off machine.

In the above stated embodiment, the thick portions 56 and 66 are provided by protruding or projecting the face of the plates 51 and 61 which is opposite the ribs, however the thick portions 56 and 66 may protruded or project at the side of the ribs 53 and 63. In this case, a side having no ribs is mounted on the frame stand 30. Further, the extruded frame members 50 and 60 may be hollow frame members.

In another embodiment of a friction stir welding method according to the present invention shown in Fig. 7, a tip end 57 of the thick portion 56 of one extruded frame member 50 is projected towards the other extruded frame member 60 and covers an upper portion of the gap g. When the size G of the gap g is small, the tip or projection chip 57 overlaps the apex of the thick thickness portion 66. Accordingly, the supplementing of the metal to the gap g can be carried out easily.

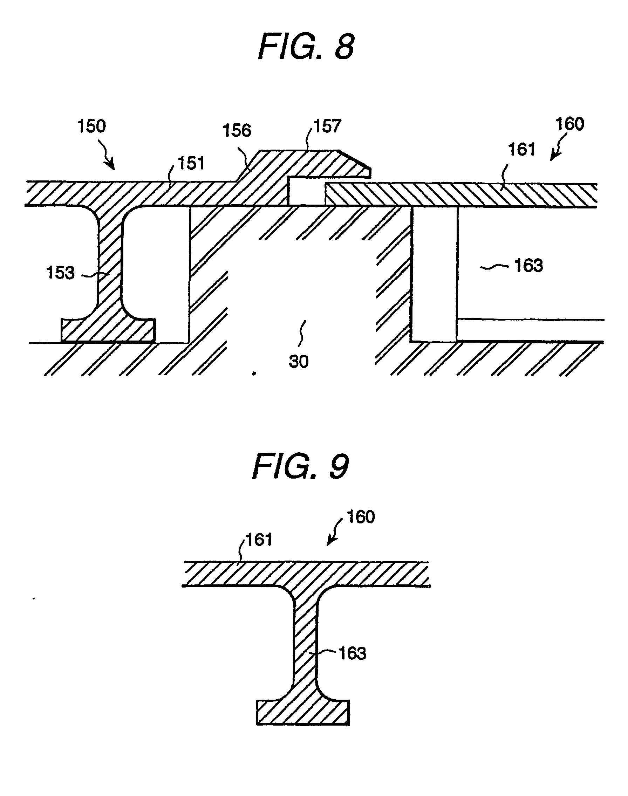

In a case of a further embodiment of friction stir welding according to the present invention shown in Fig. 8 and Fig. 9, the extrusion directions of the two extruded frame members 150 and 160 are orthogonal. Fig. 8 shows a condition before the friction stir welding. Ribs 153 and 163 are provided at one side of the extruded frame members 150 and 160. An end portion of the extruded frame member 150 constitutes a thick portion 156. The thick portion 156 projects towards the other extruded frame member 160 to be welded and constitutes a projection chip 157.

A projection dimension of the projection chip 157 has a length which overlaps to a plate 161 of the other extruded frame member 160 when the size G of the gap g is small. When the size G of the gap g is large, the projection chip 157 overlaps to the plate. The projection chip 157 corresponds to the projection chip 57. The rib 163 at the vicinity of the extruded frame member is cut off and removed. A tip end of the projection chip 157 is formed slope-wise similarly to the thick thickness portion 156.

With the above stated construction, by inserting the rotary body 70 from above the friction stir welding is carried out. Since the projection chip 157 exists above the gap g between the two extruded frame members 150 and 160, the metal of the projection chip 157 etc. is supplied to the gap g. Further, to the upper portion of the extruded frame member 160 the metal is supplied. Accordingly, in comparison with a case where the projection chip 167 is absent, good friction stir welding can be obtained.

The above stated friction stir method and the above stated friction stir welding apparatus can be applied to welding of already well known honeycomb panels each other. The honeycomb panel comprises two face plates, a honeycomb shape core member between the two face plates and an edge member arranged at a periphery of the core member. A subject member to be subjected to welding can be pipes etc.. In this case, the elements such as a plate shown in the above stated embodiments can read suitably for a tube, etc..

By the present invention, even if the size of the gap between two members to be welded is large, a full friction stir welding can be attained.

## Claims

1. A method of a friction stir welding, comprising rotating a rotary body (70) about a rotation axis and moving said rotary body along a welding line of two members (50, 60) to be welded,
**characterized by** reciprocating said rotary body (70) in a direction orthogonal to the welding line and orthogonal to the rotation axis.

2. A method of a friction stir welding according to claim 1, wherein the moving speed in said orthogonal direction of said rotary body is more than two times the moving speed of said rotary body along said welding line.

3. A method according to claim 1, further comprising the steps of:
opposing the two members to be welded;
detecting the size of a gap between the two members; and
carrying out the reciprocating motion of the rotary body when the size of said gap is more than a predetermined value.

4. A method according to claim 3, further comprising the step of stopping the reciprocating motion of the rotary body when the size of the gap is less than a predetermined value.

5. A method according to any one of claims 1 to 4, wherein each member has a thick portion protruding from one face at an end portion thereof, and wherein said rotary body has a small diameter portion located at a tip end of a large diameter portion, with a boundary face between them, the method including the steps of opposing the members and locating the rotary body such that the small diameter portion is inserted in the thick portion, and the boundary face is located between an apex of the thick portion and an extension line of the face of at least one of said members.

6. A method according to claim 5 wherein one of said members has a portion which projects from the thick portion of that member, the method including the step of opposing the members such that said projecting portion covers a gap between the thick portions of the members.

7. A method according to any one of claims 1 to 4, wherein one of the members has a thick portion protruding from one face in the thickness direction at an end portion of the member, the thick portion having a portion which projects therefrom, and wherein said rotary body has a small diameter portion located at the tip end of a large diameter portion, with a boundary face between them, the method including the steps of:
opposing the respective end portions of the members to overlap the projecting portion with the other member; and
locating the rotary body such that the small diameter portion is inserted in said thick portion and the boundary face is located between an apex of the thick portion and an extension line of said one face.

8. A method according to any one of claims 1 to 7, wherein the two members to be welded are frame members.

9. A method according to claim 8, wherein the frame members are extruded frame members having plural ribs on only one face of a plate.

10. An apparatus for friction stir welding, comprising:
a rotation apparatus (130) for rotating a rotary body (70) about a rotation axis, the rotary body having a small diameter portion (72) at a tip end of a large diameter portion (71) of said rotary body;
**characterized by** a drive apparatus (136) for reciprocating said rotary body orthogonally with respect to the rotation axis; and
traversing means (110) for moving said rotation apparatus and said drive apparatus in an orthogonal direction relative to said reciprocating motion of said rotary body.

## Patentansprüche

1. Verfahren zum Rührreibschweißen mit den Schritten: Rotieren eines Rotationskörpers (70) um eine Rotationsachse und Bewegen des Rotationskörpers entlang einer Schweißlinie zweier zu verschweißender Teile (50, 60),
**gekennzeichnet durch** senkrechtes Pendeln des Rotationskörpers (70) bezüglich der Schweißlinie und der Rotationsachse.

2. Verfahren zum Rührreibschweißen nach Anspruch 1, wobei die senkrechte Pendelgeschwindigkeit des Rotationskörpers mehr als das Zweifache der Bewegungsgeschwindigkeit des Rotationskörpers entlang der Schweißlinie beträgt.

3. Verfahren nach Anspruch 1 mit folgenden weiteren Schritten:
Gegenüberlegen der zwei zu verschweißenden Teile,
Erkennen der Größe eines Spaltes zwischen den beiden Teilen, und
Ausführen der Pendelbewegung des Rotationskörpers, wenn die Spaltgröße einen vorbestimmten Wert überschreitet.

4. Verfahren nach Anspruch 3 mit dem zusätzlichen Schritt des Beendens der Pendelbewegung des Rotationskörpers, wenn die Größe des Spaltes einen vorbestimmten Wert unterschreitet.

5. Verfahren nach einem der Ansprüche 1 bis 4, wobei jedes Teil einen dicken Abschnitt aufweist, der an einer Stirnfläche eines Endabschnitts hervorsteht, und wobei der Rotationskörper am spitzenseitigen Ende eines Abschnitts mit großem Durchmesser einen Abschnitt mit kleinem Durchmesser mit einer dazwischenliegenden Verbindungsfläche aufweist, und das Verfahren folgende Schritte umfaßt: Gegenüberlegen der Teile und Anordnen des Rotationskörpers so, daß der Abschnitt mit kleinem Durchmesser in den dicken Abschnitt hineinragt und die Verbindungsfläche zwischen einem Scheitel des dicken Abschnitts und der Verlängerungslinie der Stirnfläche von mindestens einem der Teile angeordnet ist.

6. Verfahren nach Anspruch 5, wobei eines der Teile einen Abschnitt aufweist, der aus dem dicken Abschnitt des Teils herausragt, und das Verfahren den Schritt des Gegenüberlegens der Teile umfaßt, so daß der herausragende Abschnitt einen Spalt zwischen den dicken Abschnitten der Teile abdeckt.

7. Verfahren nach einem der Ansprüche 1 bis 4, wobei eines der Teile einen dicken Abschnitt aufweist, der an der Stirnfläche eines Endabschnitts in Richtung der Dicke hervorsteht, der dicke Abschnitt einen Abschnitt aufweist, der daraus herausragt, und der Rotationskörper am spitzenseitigen Ende eines Abschnitts mit großem Durchmesser einen Abschnitt mit kleinem Durchmesser mit einer dazwischenliegenden Verbindungsflache aufweist, und das Verfahren folgende Schritte umfaßt:
Gegenüberlegen der jeweiligen Endabschnitte der Teile um den herausragenden Abschnitt mit dem anderen Teil zu überlappen, und
Anordnen des Rotationskörpers so, daß der Abschnitt mit kleinem Durchmesser in den dicken Abschnitt hineinragt, und die Verbindungsfläche zwischen dem Scheitel des dicken Abschnitts und der Verlängerungslinie der Stirnfläche liegt.

8. Verfahren nach einem der Ansprüche 1 bis 7, wobei die beiden zu verschweißenden Teile Rahmenteile sind.

9. Verfahren nach Anspruch 8, wobei die Rahmenteile stranggepreßte Rahmenteile sind, bei denen mehrere Rippen auf nur einer Seite einer Platte angeordnet sind.

10. Vorrichtung zum Rührreibschweißen mit:
einer Rotationsvorrichtung (130) zum Rotieren eines Rotationskörpers (70) um eine Rotationsachse, wobei der Rotationskörper einen Abschnitt (72) mit kleinem Durchmesser aufweist, der an einem spitzenseitigen Ende eines Abschnitts des Rotationskörpers mit großem Durchmesser (71) angeordnet ist,
**gekennzeichnet durch**
eine Antriebsvorrichtung (136) zum Pendeln des Rotationskörpers senkrecht zur Rotationsachse, und
eine Vorschubeinrichtung (110) zum Bewegen des Rotationskörpers und der Antriebsvorrichtung senkrecht zur Pendelbewegung des Rotationskörpers.

## Revendications

1. Procédé de soudage par friction à mouvement cyclique, comportant les étapes consistant à mettre en rotation un corps rotatif (70) autour d'un axe de rotation, et à déplacer ledit corps rotatif le long d'une ligne de soudage de deux éléments (50,60) devant être soudés,
**caractérisé par** l'étape consistant à mettre en va et vient ledit corps rotatif (70) dans une direction perpendiculaire à la ligne de soudage, et perpendiculaire à l'axe de rotation.

2. Procédé de soudure par friction à mouvement cyclique selon la revendication 1, dans lequel la vitesse de déplacement dans ladite direction perpendiculaire dudit corps rotatif est supérieure à deux fois la vitesse de déplacement dudit corps rotatif le long de ladite ligne de soudage.

3. Procédé selon la revendication 1, comportant de plus les étapes consistant à :
mettre en opposition les deux éléments devant être soudés,
détecter la dimension d'un espace existant entre les deux éléments, et
mettre en oeuvre le mouvement en va et vient du corps rotatif lorsque la dimension dudit espace est supérieure à une valeur prédéterminée.

4. Procédé selon la revendication 3, comportant de plus l'étape consistant à stopper le mouvement en va et vient du corps rotatif lorsque la dimension de l'espace est inférieure à une valeur prédéterminée.

5. Procédé selon l'une quelconque des revendications 1 à 4, dans lequel chaque élément a une partie épaisse faisant saillie à partir d'une face à une partie d'extrémité de celui-ci, et dans lequel ledit corps rotatif a une partie de petit diamètre située à une extrémité de pointe d'une partie de grand diamètre, une face de limite étant située entre elles, le procédé comportant les étapes consistant à mettre en opposition les éléments, et à positionner le corps rotatif de telle sorte que la partie de petit diamètre est insérée dans la partie épaisse, et la face de limite est positionnée entre un sommet de la partie épaisse et un ligne de prolongement de la face d'au moins un desdits éléments.

6. Procédé selon la revendication 5, dans lequel un desdits éléments a une partie qui fait saillie à partir de la partie épaisse de cet élément, le procédé comportant l'étape consistant à mettre en opposition les éléments, de telle sorte que ladite partie faisant saillie recouvre un espace situé entre les parties épaisses des éléments.

7. Procédé selon l'une quelconque des revendications 1 à 4, dans lequel un des éléments à une partie épaisse faisant saillie à partir d'une première face dans la direction d'épaisseur à une partie d'extrémité de l'élément, la partie épaisse faisant une partie qui fait saillie à partir de celle-ci, et dans lequel ledit corps rotatif a une partie de petit diamètre située à l'extrémité de pointe d'une partie de grand diamètre, une face de limite étant située entre celles-ci, le procédé comportant les étapes consistant à :
mettre en opposition les parties d'extrémité respectives des éléments pour chevauchement de la partie faisant saillie avec l'autre élément, et
positionner le corps rotatif de telle sorte que la partie de petit diamètre est insérée dans ladite partie épaisse, la face de limite est positionnée entre un sommet de la partie épaisse et une ligne de prolongement de ladite première face.

8. Procédé selon l'une quelconque des revendications 1 à 7, dans lequel l'un des éléments devant être soudé sont des éléments de châssis.

9. Procédé selon la revendication 8, dans lequel les éléments de châssis sont des éléments de châssis extrudés ayant plusieurs nervures sur une seule face d'une plaque.

10. Dispositif de soudage par friction à mouvement cyclique, comportant :
un dispositif de rotation (130) pour mettre en rotation un corps rotatif (70) autour d'un axe de rotation, le corps rotatif ayant une partie de petit diamètre (72) à une extrémité de pointe d'une partie de grand diamètre (71) dudit corps rotatif,
**caractérisé par** un dispositif d'entraînement (136) pour mettre en va et vient ledit corps rotatif perpendiculairement par rapport à l'axe de rotation, et
des moyens de traversée (110) pour déplacer ledit dispositif de rotation et ledit dispositif d'entraînement dans une direction perpendiculaire audit mouvement de va et vient dudit corps rotatif.
